# EUROPÄISCHE PATENTSCHRIFT

(11) **EP 1 033 275 B1**
(45) Veröffentlichungstag und Bekanntmachung des Hinweises auf die Patenterteilung: **25.08.2004**
(21) Anmeldenummer: 00103008.9
(22) Anmeldetag: 15.02.2000
(51) Int. Cl.: B60K 26/02, F02D 11/02

(54) **Modul mit Krafthysterese**
Module with force hysteresis
Module avec hystérésis de force

(30) Priorität: 04.03.1999 DE 19909476
(43) Veröffentlichungstag der Anmeldung: 06.09.2000
(73) Patentinhaber: Siemens Aktiengesellschaft, 80333 München (DE)
(72) Erfinder: Weis, Christian, 55120 Mainz (DE)

(56) Entgegenhaltungen:
- EP-A- 0 748 713
- EP-A- 0 899 147
- EP-A- 0 923 015
- DE-A- 19 517 172
- US-A- 5 819 593

## Beschreibung

Die Erfindung befaßt sich mit einem Modul zur Erzeugung einer Krafthysterese beim Verschwenken eines drehbar in einem Gehäuse gelagerten Drehelements entsprechend dem Oberbegriff von Anspruch 1.

Derartige Module verwendet man beispielsweise in sog. "Driveby-Wire"-Anlagen dazu, die von bisher üblichen Seilzugmechanismen bekannten Reibkräfte, die zu einer Krafthysterese beim Verschwenken der drehbar gelagerten Elemente führen, zu simulieren, um den Bedienpersonen die vertrauten Betätigungscharakteristiken zu erhalten.

Neben sehr aufwendigen Lösungen, wie sie zum Beispiel aus der deutschen Patentanmeldung 197 37 289.9 bekannt sind, deren komplizierter mechanischer Aufbau teuer in der Herstellung und störungsempfindlich im Betrieb ist, ist aus der deutschen Patentanmeldung 198 48 091 ein Modul zur Erzeugung einer Krafthysterese bekannt. Ein solches Modul läßt sich bei einem mit einer Rückstellfeder versehenen Betätigungselement zusätzlich anordnen, um die gewünschte Krafthysterese zu erzeugen. Bei dieser vorbekannten Lösung sind daher immer zwei getrennte Federn zu Erzeugung der Hysterese und der Rückstellkraft vonnöten. Durch die größere Zahl an Bauteilen und den dadurch hervorgerufenen höheren Montageaufwand wird die Herstellung verteuert.

Ein Modul der eingangs genannten Art ist aus der EP 0 748 713 A2 bekannt. Dort ist das Federelement gehäuseseitig festgelegt und das Reibelement liegt zwischen dem Drehelement und dem freien Ende des Federelements. Das Reibelement ist mittels einer besonderen Schrägfläche an dem Drehelement radial nach außen gegen eine Reibfläche andrückbar. Neben dem hohen konstruktiven Aufwand bezüglich der Geometrie des Drehelements und des Reibelements ist die erschwerte Montage dieses Moduls zu nennen, da das federbelastete Reibelement in seiner beweglichen Position zwischen Feder und Drehelement nicht vor dem Einbau in das Gehäuse an dem Drehelement vormontiert werden kann.

Die Aufgabe der Erfindung besteht darin, ein Modul zur Erzeugung einer Krafthysterese zu schaffen, das bei geringem konstruktivem Aufwand eine Rückstellung des Drehelements ermöglicht.

Erfindungsgemäß wird die Aufgabe durch ein Modul mit den Merkmalen des Anspruches 1 gelöst.

Das erfindungsgemäße Modul bietet den Vorteil, daß das Federelement einerseits das notwendige Rückstellmoment um die Drehachse erzeugt und andererseits die zur Erzeugung der Reibkräfte notwendige Anlagekraft des Reibelements an der Reibfläche bewirkt. Neben der Teilereduzierung, die eine kostengünstigere Herstellung erlaubt, verringert sich auch der Platzbedarf der erfindungsgemäßen Lösung gegenüber bisher bekannten Modulen zur Erzeugung einer Krafthysterese. Die Höhe des Rückstellmoments und ihr Verhältnis zu den erzeugten Reibkräften kann durch unterschiedliche Vorspannungen des Federelements, unterschiedliche Geometrien und / oder durch eine Veränderung der Reibpaarung Reibelement / Reibfläche erreicht werden. Die Reibkraft ist selbstverständlich nur so groß, daß sie die Rückstellbewegung des Drehmoments unter den Rückstellkräften nicht wesentlich behindert.

Bei vielen Anwendungsfällen ist es gewünscht, das Rückstellmoment und / oder die Krafthysterese in Abhängigkeit von der relativen Drehwinkelstellung des Drehelements zu variieren. Dies läßt sich bei einer vorteilhaften Ausführungsform der Erfindung einfach dadurch erreichen, daß die Reibfläche mit sich veränderndem Radius um die Drehachse gekrümmt angeordnet ist.

Durch entsprechende Krümmungen lassen sich degressive und progressive Kennlinien der Rückstellkraft mit sich veränderndem Hystereseanteil erreichen. Bei einer besonders einfachen Ausführungsform der Erfindung bildet die Gehäusekontur die Reibfläche.

In einer bevorzugten Ausführungsform der Erfindung ist vorgesehen, daß das Reibelement in dem Drehelement in einer Führung linear verschieblich geführt ist, wobei die Führungsbahn auf einer in einem bestimmten Abstand zur Drehachse verlaufenden Geraden liegt.

Die außermittige Anordnung der Führungsbahn führt dazu, daß die Reaktionskraft der Antagekraft des Reibelements an der Reibfläche zu einem Rückstellmoment um die Drehachse führt. Grundsätzlich ist es denkbar, das Reibelement auch in einer gekrümmten Führung zu führen, wobei dann die Tangente der Führungsbahn in keiner Winkelstellung des Drehelements die Drehachse schneiden sollte. Die Führungen der Reibelemente sorgen damit in allen Drehwinkelstellungen für ein genau definiertes Rückstellmoment und eine präzise Anlage des Reibelements an der Reibfläche.

Die Führung des Reibelements kann beispielsweise dadurch erfolgen, daß das Reibelement in einer seinem Querschnitt angepaßten Führungsbohrung in dem Drehelement sitzt. Hierdurch ergibt sich eine besonders gleichmäßige und reibungsarme Führung des Reibelements, die eine gleichbleibende Andruckskraft des Reibelements an der Reibfläche sicherstellt.

In einer weiteren bevorzugten Ausführungsform der Erfindung ist vorgesehen, daß das Reibelement drehstarr in der Führungsbohrung geführt ist. Die drehstarre Führung kann beispielsweise mit einer Nase erreicht werden, die in einer in Führungslängsrichtung ausgebildeten Nut läuft. Ovale oder polygone Querschnitte der Führungsbohrung können ebenfalls eine Drehsicherung bilden, sind jedoch in der Herstellung aufwendiger. Die drehstarre Führung sorgt für eine gleichbleibende Anlage des Reibelements an der Reibfläche, so daß übermäßigem Verschleiß der Reibpartner entgegengewirkt wird und die Reibungskräfte im Laufe des Betriebes möglichst konstant bleiben.

In einer weiteren bevorzugten Ausführungsform der Erfindung ist vorgesehen, daß das Federelement eine auf Druck beanspruchte Schraubenfeder ist, die in der Führung des Reibelements sitzt.

Insbesondere bei zylindrischen Führungsbohrungen ergibt sich dabei ein sehr einfacher Aufbau des Moduls, da die Führungsbohrung für das Reibelement gleichzeitig die Aufnahme für das Federelement bilden kann. Auch die Montage eines derartigen Moduls gestaltet sich sehr einfach.

Vorzugsweise sind zwei Federelemente redundant vorgesehen.

Ein redundantes System sorgt dafür, daß auch im Versagensfall eines Federelements immer noch ein ausreichend hohes Rückstellmoment zur Verfügung steht, um das Drehelement in seine Ruhelage zurückzustellen. Hierdurch wird vermieden, daß ein mit dem Drehelement gekoppeltes Betätigungselement nach dem Bruch einer Feder in einer Betriebsstellung verharrt, so daß es zu Fehlansteuerungen kommen kann. Ein Beispiel für ein solches Betätigungselement ist das Fahrpedal eines Kraftfahrzeuges, das unter allen Umständen in die Leerlaufstellung zurückgestellt werden muß, da ansonsten Gefahrensituationen durch den weiter unter Last laufenden Motor entstehen könnten.

Das Fahrpedal beziehungsweise ein sonstiges Betätigungselement kann unmittelbar an dem Drehelement angebracht oder angeformt sein. Insbesondere bei großen Stückzahlen stellt ein derartiges Modul eine besonders kostengünstig herzustellende Variante dar. Es ist jedoch ebenfalls denkbar, daß das Gehäuse abgedichtet ist und über eine herausragende Welle zum Ankoppeln eines Betätigungselements verfügt. Eine solche Variante kann mit verschiedenen Betätigungselementen frei kombiniert werden und bietet zudem durch das geschlossene Gehäuse den Vorteil, daß sich kein von außen eindringender Schmutz auf den Reibflächen oder auf den Kontaktbahnen eines eventuell vorhandenen Sensors zur Erfassung der Drehwinkelstellung absetzen kann.

Vorzugsweise weist das Reibelement einen Anschlag auf, der bei übermäßigem Verschleiß des Reibelements mit einem in seine Schwenkbahn ragenden gehäuseseitigen Anschlag zusammenwirkt. Ein derartiger Anschlag verhindert, daß es nach längerem Betrieb und mangelhafter Wartung zu einem derart starken Verschleiß des Reibelements kommt, daß der Reibbelag des Reibelements völlig verschlissen wird und es dadurch zu weitergehenden Beschädigungen kommt oder daß das auf das Drehelement wirkende Rückstellmoment infolge einer unzulässig stark entspannten Feder soweit absinkt, daß eine einwandfreie Rückstellung nicht mehr sicher gegeben ist. Die durch den Anschlag gegebene Begrenzung sorgt dafür, daß sich die Feder unmittelbar auf dem Anschlag abstützt und dadurch das erforderliche Mindestrückstellmoment gewährleistet ist. Da die Krafthysterese in erster Linie aus Komforterwägungen gewählt wird, nimmt man aus Sicherheitsaspekten einen Rückgang der Hysteresewirkung bei einem an sich unzulässigen Verschleiß in Kauf. Ein Anschlag kann auch dann zweckmäßig sein, wenn eine Krafthysterese ohnehin nur in einem beschränkten Winkelbereich erwünscht ist. Bei einer entsprechenden Gestaltung der Reibfläche kann sich das Federelement über einen bestimmten Winkelbereich an dem Anschlag abstützen, während in einem weiteren Winkelbereich eine Anlage des Reibelements an der Reibfläche unter der Last des Federelements erfolgt.

Vorzugsweise befinden sich die Anschläge in einer Lage zueinander, die beim Verschwenken des Drehelements im Anlagebereich eine Relativbewegung zwischen den Anschlagsflächen im wesentlichen vermeidet. Hierdurch werden Reibbewegungen, die zu einem Verschleiß der Anschlagsflächen selbst führen könnten, vermieden.

Mit Bezug auf die beigefügten Zeichnungen werden nachstehend einige Ausführungsbeispiele der Erfindung näher beschrieben.

Es zeigen:
- Figur 1:: einen Schnitt eines Krafthysteresemoduls mit einem Fahrpedal,
- Figur 2:: einen Querschnitt des Moduls nach Figur 1,
- Figur 3:: ein Modul gemäß Figur 1 in der Vollaststellung,
- Figur 4:: einen Querschnitt eines Moduls ähnlich Figur 1 mit redundant angeordneten Federelementen,
- Figur 5:: einen Schnitt eines Krafthysteresemoduls mit einem Verschleißanschlag,
- Figur 6:: einen Querschnitt des Moduls nach Figur 5,
- Figur 7:: einen Querschnitt eines fahrpedalunabhängigen Krafthysteresemoduls.

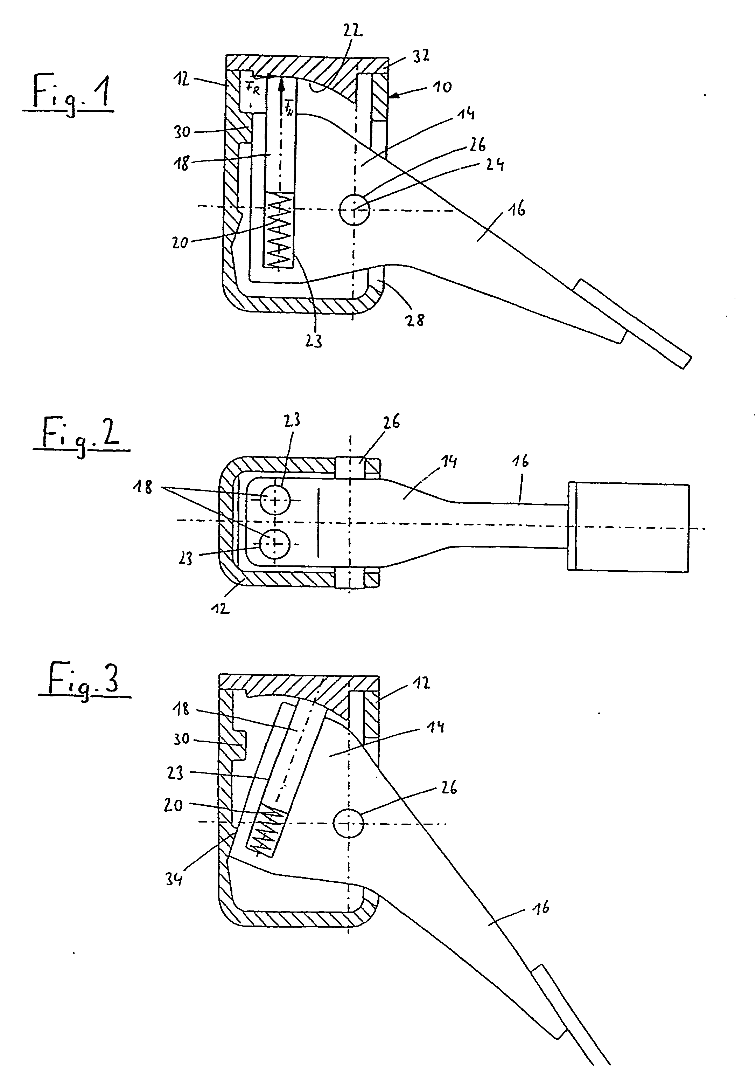

In Figur 1 ist ein Krafthysteresemodul 10 dargestellt, das im wesentlichen aus einem Gehäuse 12, einem darin schwenkbar gelagerten Drehelement 14 mit einem angeformten Fahrpedalhebel 16 und zwei in dem Drehelement 14 linear verschieblich geführten Reibelementen 18 besteht, die unter der Last zweier Schraubenfedern 20 gegen eine Reibfläche 22 an der Innenseite des Gehäuses 12 anliegen (siehe auch Figur 2). Die Reibelemente 18 und die Schraubenfedern 20 sitzen in Führungsbohrungen 23, deren exzentrische Lagen für das notwendige Rückstellmoment des Drehelements 14 des Fahrpedals 16 sorgen. Die Verschwenkbarkeit des Fahrpedals 16 um die Drehachse 24, die von einem Bolzen 26 (siehe auch Figur 2) gebildet wird, ist durch eine Gehäuseöffnung 28 gewährleistet.

In der in Figur 1 dargestellten Leerlaufstellung des Fahrpedals 16 liegt das Drehelement 14 an einem Leerlaufanschlag 30 an, der an einer Wand des Gehäuses 12 ausgebildet ist.

Die Reibfläche 22 wird durch die Innenkontur eines Gehäusedeckels 32 gebildet und ist so angeordnet, daß das von der Normalkraft F_{N} erzeugte Rückstellmoment größer als das durch die Reibungskraft F_{R} erzeugte Reibungsmoment ist, so daß immer eine Rückstellung des Fahrpedals 16 in die in Figur 1 dargestellte Leerlaufstellung gewährleistet ist. Die Reibfläche 22 ist derart in Richtung der Drehachse 24 gekrümmt, daß es beim Betätigen des Fahrpedals in Richtung der in Figur 3 dargestellten Vollaststellung, in welcher sich das Drehelement 14 an einen Vollastanschlag 34 anlegt, zu einer Kompression der Schraubenfedern 20 und somit einer Erhöhung der Normalkraft F_{N} kommt. Da sich der wirksame Abstand der Reibungskraft F_{R} zur Drehachse 24 verkleinert, verändert sich das um die Drehachse 24 wirkende Reibmoment nicht entsprechend dem durch die Normalkraft hervorgerufenen Rückstellmoment. Durch eine geeignete Krümmung der Reibfläche 22 läßt sich so eine gewünschte Betätigungscharakteristik des Fahrpedals 16 zwischen dem Leerlaufanschlag und dem Vollastanschlag erreichen.

Aus dem Querschnitt in Figur 2 ist zu erkennen, daß das Krafthysteresemodul 10 zwei redundant nebeneinander angeordnete Schraubenfedern 20 mit zugehörigen Reibelementen 16 aufweist, die im Versagensfall Notlaufeigenschaften bereithalten und selbst beim Bruch einer Schraubenfeder 20 eine Rückstellung des Fahrpedals 16 in die Leerlaufstellung gewährleisten.

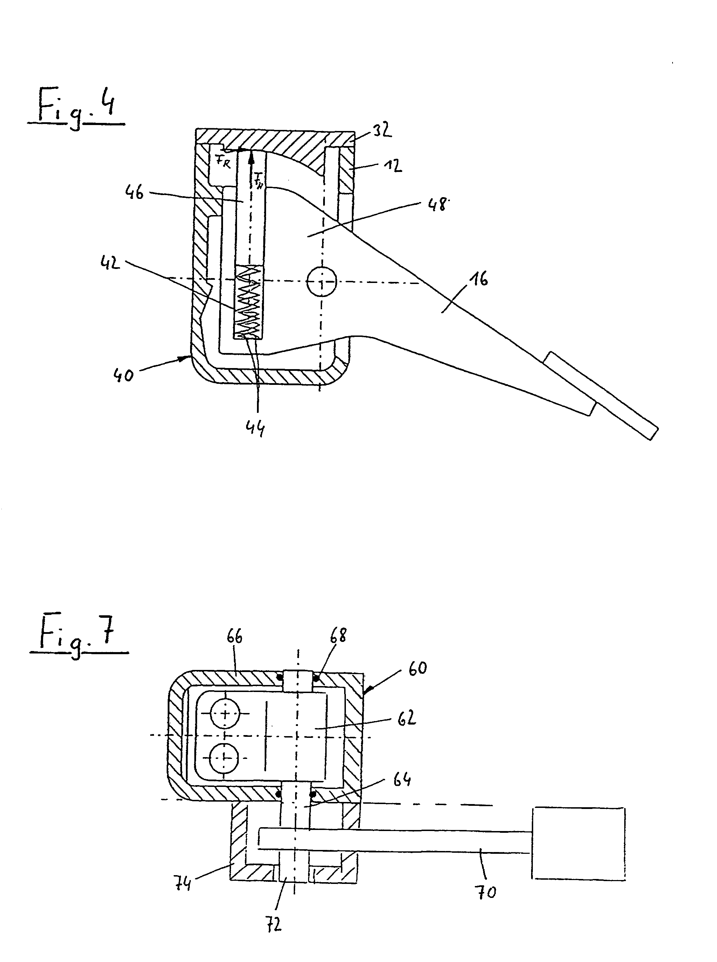

Eine weitere Ausführungsform eines Krafthysteresemoduls 40 ist in Figur 4 dargestellt. Bei diesem Modul 40 wird die Redundanz des Systems durch zwei ineinander oder nebeneinander in einer Führungsbohrung 42 montierte Schraubenfedern 44 gewährleistet, die beide auf ein einziges Reibelement 46 wirken. Das Krafthysteresemodul 40 baut noch kompakter als das in Figur 1 und 2 dargestellte Krafthysteresemodul 10 und ist noch kostengünstiger in der Herstellung, da es mit einem einzigen Reibelement 46 auskommt und nur eine Führungsbohrung 42 in dem Drehelement 48 hergestellt werden muß.

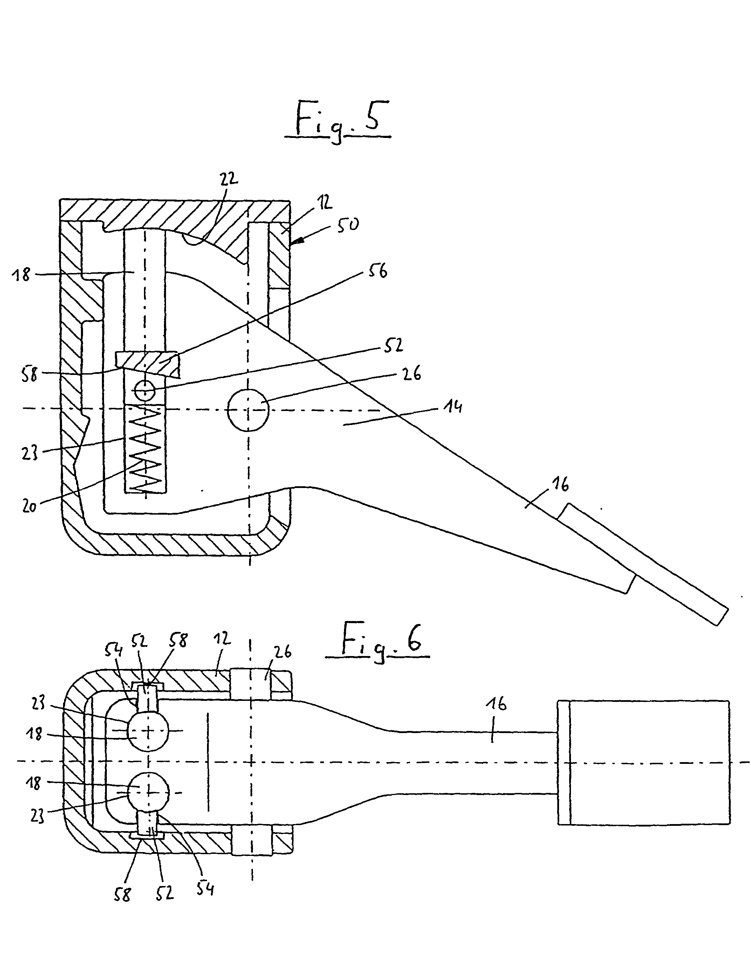

In Figur 5 und 6 ist eine weitere Ausführungsform 50 eines Krafthysteresemoduls dargestellt, das in seinem grundsätzlichen Aufbau dem Krafthysteresemodul 10 nach Figur 1 und 2 entspricht.

An den beiden Reibelementen 18 ist seitlich jeweils ein Anschlagbolzen 52 angeformt, wobei seitliche Nuten 54 in dem Drehelement 14 die unveränderte Verschieblichkeit der Reibelemente 18 in den Führungsbohrungen 23 gewährleisten. An den Seitenflanken des Gehäuses 12 sind Anschläge 56 angeformt, die in Ausfederrichtung gesehen in der Bewegungsbahn der Anschlagbolzen 52 liegen. Die Anschläge 56 können auch die Oberkanten von seitlich in den Gehäusewänden eingearbeiteten Nuten 58 darstellen. Die Anschlagspaarungen 52, 56 verhindern bei einem übermäßigen Verschleiß der Reibelemenkte 18, infolgedessen es zu einem stärkeren Ausfedern der Schraubenfedern 20 kommt, daß diese über ein bestimmtes Höchstmaß hinaus weiter entspannt werden. Auf diese Weise wird auch bei verschlissenen Reibelementen 18 ein Mindestrückstellmoment sichergestellt, wobei lediglich die Hysteresewirkung zunächst im Bereich der Leerlaufstellung und bei zunehmendem Verschleiß auch in weiteren Stellung zur Vollaststellung hin abnimmt. Die Anschlagkanten 58 der Anschläge 56 sind mit einer bestimmten Neigung in der Schwenkbahn der Anschlagbolzen 52 angeordnet, so daß es bei einem Verschwenken des Fahrpedals 16, während sich die Anschlagbolzen 52 in Anlage an den Anschlagkanten 58 befinden, nur zu sehr geringen Relativbewegungen zwischen den Bolzen 52 und den Kanten 58 kommt, um deren Verschleiß zu vermeiden.

Bei dem in Figur 7 dargestellten Ausführungsbeispiel 60 eines Krafthysteresemoduls ist dieses nicht als mit einem angeformten Fahrpedal ausgebildet, sondern das Drehelement 62 ist über eine Welle 64 schwenkbar in dem geschlossen ausgeführten Gehäuse 66 gelagert. An den Lagerstellen zwischen Welle 64 und Gehäuse 66 sind Dichtungen 68 vorgesehen, die das Eindringen von Schmutz in das Gehäuse verhindern.

Ein Fahrpedal 70 sitzt auf dem seitlich aus dem Gehäuse 66 herausragenden Wellenende 72 der Welle 64. Der Pedalhebel 70 ist in einem Modulgehäuse 74 angeordnet, das seitlich an dem Gehäuse 66 des Krafthysteresemoduls 60 angeordnet wird und gleichzeitig den Leerlauf- und Vollastanschlag für den Fahrpedalhebel 70 bildet.

Das in Figur 7 dargestellte Krafthysteresemodul 60 kann leicht auch mit sonstigen Betätigungselementen kombiniert werden, bei welchen Hystereseeigenschaften für die Betätigung gewünscht sind.

## Patentansprüche

1. Modul zur Erzeugung einer Krafthysterese beim Verschwenken eines drehbar in einem Gehäuse (12, 66) gelagerten Drehelements (14, 62) mit wenigstens einem Federelement (20, 44), dessen freies Ende auf ein Reibelement (18, 46) wirkt, das auf einer ortsfest angeordneten Reibfläche (22) gleitet, wobei die Reaktionskraft des Federelements (20, 44) in allen Winkelstellungen des Drehelements (14, 62) relativ zu dem Gehäuse (12, 62) ein Rückstellmoment auf das Drehelement (14, 62) um die Drehachse aufbringt **dadurch gekennzeichnet, daß** das wenigstens eine Federelement (20, 44) an dem Drehelement (14, 62) festgelegt und mit diesem schwenkbar ist.

2. Modul nach Anspruch 1, **dadurch gekennzeichnet, daß** die Reibfläche (22) mit sich veränderndem Radius um die Drehachse gekrümmt angeordnet ist.

3. Modul nach Anspruch 1 oder 2, **dadurch gekennzeichnet, daß** eine Gehäusekontur die Reibfläche (22) bildet.

4. Modul nach einem der Ansprüche 1 bis 3, **dadurch gekennzeichnet, daß** das Reibelement (18, 46) in dem Drehelement (14, 62) in einer Führung (23, 42) linear verschieblich geführt ist, wobei die Führungsbahn auf einer in einem bestimmten Abstand zur Drehachse (24) verlaufenden Gerade liegt.

5. Modul nach Anspruch 4, **dadurch gekennzeichnet, daß** das Reibelement (18, 46) in einer seinem Querschnitt angepaßten Führungsbohrung (23, 42) in dem Drehelement (14, 62) sitzt.

6. Modul nach Anspruch 5, **dadurch gekennzeichnet, daß** das Reibelement (18, 46) drehstarr in der Führungsbohrung (23, 42) geführt ist.

7. Modul nach einem der Ansprüche 4 bis 6, **dadurch gekennzeichnet, daß** das Federelement (20, 44) eine auf Druck beanspruchte Schraubenfeder ist, die in der Führung (23, 42) des Reibelements (18, 46) sitzt.

8. Modul nach einem der vorhergehenden Ansprüche, **dadurch gekennzeichnet, daß** zwei Federelemente (20, 44) redundant vorgesehen sind.

9. Modul nach einem der vorhergehenden Ansprüche, **dadurch gekennzeichnet, daß** das Gehäuse (66) abgedichtet ist und über eine herausragende Welle (64, 72) zum Ankoppeln eines Betätigungselements (70) verfügt.

10. Modul nach einem der Ansprüche 1 bis 8, **dadurch gekennzeichnet, daß** an dem Drehelement (14) ein Betätigungselement (16) angebracht oder angeformt ist.

11. Modul nach Anspruch 10, **dadurch gekennzeichnet, daß** das Betätigungselement ein Fahrpedal (16) eines Kraftfahrzeuges ist.

12. Modul nach einem der Ansprüche 9 bis 11, **dadurch gekennzeichnet, daß** ein Sensor zur elektrischen Erfassung der Drehwinkelstellung des Drehelements (14, 62) vorgesehen ist.

13. Modul nach einem der vorhergehenden Ansprüche, **dadurch gekennzeichnet, daß** das Reibelement einen Anschlag (52) aufweist, der bei übermäßigem Verschleiß des Reibelements (18) mit einem in seine Schwenkbahn ragenden gehäuseseitigen Anschlag (56, 58) zusammenwirkt.

14. Modul nach Anspruch 13, **dadurch gekennzeichnet, daß** sich die Anschläge (52, 56, 58) in einer Lage zueinander befinden, die beim Verschwenken des Drehelements (14) in einem Bereich, in welchem die Anschlagsflächen aneinander anliegen, eine Relativbewegung zwischen den Anschlagsflächen im wesentlichen vermeidet

## Claims

1. Module for producing a force hysteresis during pivoting of a rotary element (14, 62) which is mounted rotatably in a housing (12, 66) and has at least one spring element (20, 44), of which the free end acts on a friction element (18, 46) which slides on a stationary friction surface (22), wherein, in all the angled positions of the rotary element (14, 62) relative to the housing (12, 66), the reaction force of the spring element (20, 44) subjects the rotary element (14, 62) to a restoring moment about the rotary spindle, **characterized in that** the at least one spring element (20, 44) is secured on the rotary element (14, 62) and can be pivoted therewith.

2. Module according to Claim 1, **characterized in that** the friction surface (22) is arranged such that it curves with a changing radius about the rotary spindle.

3. Module according to Claim 1 or 2, **characterized in that** a housing contour forms the friction surface (22).

4. Module according to one of Claims 1 to 3, **characterized in that** the friction element (18, 46) is guided in a linearly displaceable manner in a guide (23, 42) of the rotary element (14, 62), the guide path being located on a straight line running at a certain distance from the rotary spindle (24).

5. Module according to Claim 4, **characterized in that** the friction element (18, 46) is seated in a guide bore (23, 42) in the rotary element (14, 62), said guide bore being adapted to the cross section of the friction element.

6. Module according to Claim 5, **characterized in that** the friction element (18, 46) is guided in a rotationally fixed manner in the guide bore (23, 42).

7. Module according to one of Claims 4 to 6, **characterized in that** the spring element (20, 44) is a helical spring which is subjected to compressive loading and is seated in the guide (23, 42) of the friction element (18, 46).

8. Module according to one of the preceding claims, **characterized in that** two spring elements (20, 44) are provided for redundancy.

9. Module according to one of the preceding claims, **characterized in that** the housing (66) is sealed and has a projecting shaft (64, 72) to which an actuating element (70) can be coupled.

10. Module according to one of Claims 1 to 8, **characterized in that** an actuating element (16) is fitted or integrally formed on the rotary element (14).

11. Module according to Claim 10, **characterized in that** the actuating element is an accelerator pedal (16) of a motor vehicle.

12. Module according to one of Claims 9 to 11, **characterized in that** a sensor is provided for electrically sensing the angle-of-rotation position of the rotary element (14, 62).

13. Module according to one of the preceding claims, **characterized in that** the friction element has a stop (52) which, in the event of excessive wear of the friction element (18), interacts with a housing-side stop (56, 58) projecting into the pivot path thereof.

14. Module according to Claim 13, **characterized in that** the stops (52, 56, 58) are located in a position in relation to one another which during pivoting of the rotary element (14), in a region in which the stop surfaces butt against one another, essentially avoids relative movement between the stop surfaces.

## Revendications

1. Module pour produire une hystérésis de force lors du pivotement d'un élément rotatif (14, 62) monté de manière rotative dans un boîtier (12, 66) et pourvu d'au moins un élément ressort (20, 44) dont l'extrémité libre agit sur un élément de friction (18, 46) qui glisse sur une surface de friction (22) fixe, la force de réaction de l'élément ressort (20, 44) appliquant un moment de rappel sur l'élément rotatif (14, 62) autour de l'axe de rotation dans toutes les positions angulaires de l'élément rotatif (14, 62) par rapport au boîtier (12, 62), **caractérisé en ce que** l'au moins un élément ressort (20, 44) est fixé sur l'élément rotatif (14, 62) et peut pivoter avec ce dernier.

2. Module selon la revendication 1, **caractérisé en ce que** la surface de friction (22) est disposée autour de l'axe de rotation suivant une courbure dont le rayon se modifie.

3. Module selon la revendication 1 ou 2, **caractérisé en ce qu'**un contour du boîtier forme la surface de friction (22).

4. Module selon l'une des revendications 1 à 3, **caractérisé en ce que** l'élément de friction (18, 46) est guidé d'une manière permettant un déplacement linéaire dans une glissière (23, 42) dans l'élément rotatif (14, 62), la glissière de guidage étant située sur une droite s'étendant à une distance déterminée de l'axe de rotation (24).

5. Module selon la revendication 4, **caractérisé en ce que** l'élément de friction (18, 46) est logé dans un alésage de guidage (23, 42) adapté à sa section transversale dans l'élément rotatif (14, 62).

6. Module selon la revendication 5, **caractérisé en ce que** l'élément de friction (18, 46) est guidé dans l'alésage de guidage (23, 42) d'une manière rigide en rotation.

7. Module selon l'une des revendications 4 à 6, **caractérisé en ce que** l'élément ressort (20, 44) est un ressort à boudin sollicité en pression qui est logé dans la glissière (23, 42) de l'élément de friction (18, 46).

8. Module selon l'une des revendications précédentes, **caractérisé en ce que** deux éléments ressorts (20, 44) sont prévus pour la redondance.

9. Module selon l'une des revendications précédentes, **caractérisé en ce que** le boîtier (66) est étanchéifié et est pourvu d'un arbre (64, 72) saillant servant à l'accouplement d'un élément d'actionnement (70).

10. Module selon l'une des revendications 1 à 8, **caractérisé en ce qu'**un élément d'actionnement (16) est monté sur l'élément rotatif (14) ou solidaire de celui-ci.

11. Module selon la revendication 10, **caractérisé en ce que** l'élément d'actionnement est une pédale d'accélérateur (16) d'un véhicule automobile.

12. Module selon l'une des revendications 9 à 11, **caractérisé en ce qu'**un capteur est prévu pour la détection électrique de la position angulaire de rotation de l'élément rotatif (14, 62).

13. Module selon l'une des revendications précédentes, **caractérisé en ce que** l'élément de friction est pourvu d'une butée (52) qui, en cas d'usure exagérée de l'élément de friction (18), coopère avec une butée (56, 58) située sur le côté du boîtier et avançant dans sa trajectoire de pivotement.

14. Module selon la revendication 13, **caractérisé en ce que** les butées (52, 56, 58) se trouvent dans une position les unes par rapport aux autres qui évite essentiellement un mouvement relatif entre les surfaces de butée lors du pivotement de l'élément rotatif (14) dans une zone dans laquelle les surfaces de butée sont en contact les unes avec les autres.
